# EUROPEAN PATENT SPECIFICATION

(11) **EP 1 478 196 B1**
(45) Date of publication and mention of the grant of the patent: **19.11.2008**
(21) Application number: 04380107.5
(22) Date of filing: 12.05.2004
(51) Int. Cl.: H04Q 7/32

(54) **Module and method for detecting at least one event in a cellular mobile telephony subscriber equipment, a computer program to carry out the method and a card and terminal with the module.**
Modul und Verfahren zur Erfassung wenigstens eines Ereignisses in einem zellularen mobilen Telefon-Teilnehmergerät, ein Computerprogramm zur Ausführung des Verfahrens sowie eine Karte und Engerät zu dem Modul
Module et procédé pour détecter au moins un évènement dans un équipement cellulaire d'abonné de téléphonie mobile, un programme d'ordinateur pour mettre en oeuvre le procédé et une carte et terminal à carte

(30) Priority: 12.05.2003 ES 200301086
(43) Date of publication of application: 17.11.2004
(73) Proprietor: Vodafone Group PLC, Newbury Berkshire RG14 2FN (GB)
(72) Inventor: Contreras Alvarez, Francisco, 28022 Madrid (ES); Gonzalez Recuero, Mario, 28700 San Sebastian de los Reyes-Madrid (ES)
(74) Representative: Davila Baz, Angel

(56) References cited:
- EP-A2- 1 047 277
- WO-A-96/35304
- US-A1- 2004 166 839

## Description

### HELD OF THE INVENTION

The invention is encompassed within the field of mobile telephony. As is known, English acronyms and terms are normally used in said field to refer to elements and concepts belonging to the field. The English acronyms and terms used in this text will be explained throughout the text.

### BACKGROUND OF THE INVENTION

### TECHNICAL CONCEPTS

### Smart card:

A smart card comprises an electronic device similar to a PC in terms of its architecture, but it is inserted in a plastic card. Smart cards are based on an integrated circuit incorporating the following elements:
- CPU: Central Processing Unit. It can also incorporate a cryptoprocessor.
- Volatile Memory: this is the memory unit used for the temporary storage of data. It is usually a RAM memory.
- Non-volatile Memory: this memory stores data permanently. It is used for the storage of directories, files and applications or programs such as what occurs with the hard drive of a conventional PC. There are usually two types of memory referred to within this group: a) ROM memory: it usually cannot be deleted and applications necessary for starting up the card are usually stored in it; 2) EEPROM memory: it can be written in and deleted, even though it has a life time which depends on the number of writings which are done in it. Directories, files and some applications are usually stored in this memory.
- Input/output unit: an element through which the card can communicate with an external device, for example, with a mobile terminal, a card reader, etc.

The communication of the smart card with the different external devices is based on 5-byte commands which indicate the action to carry out. On some occasions, the command is accompanied with data necessary for carrying out the action, for example, updating a file in the card. On other occasions, it is the card that must return data to the device which requested the action, for example, when it is the reading of a file.

As occurs in a PC, in a smart card it is possible to install several applications of any kind, for example:
- electronic purse applications;
- subscriber data management applications;
- security applications.

All the information related to the functioning and architecture of the smart cards is included in the ISO 7816 (from part 1 to part 9) standards.

### Mobile telephone:

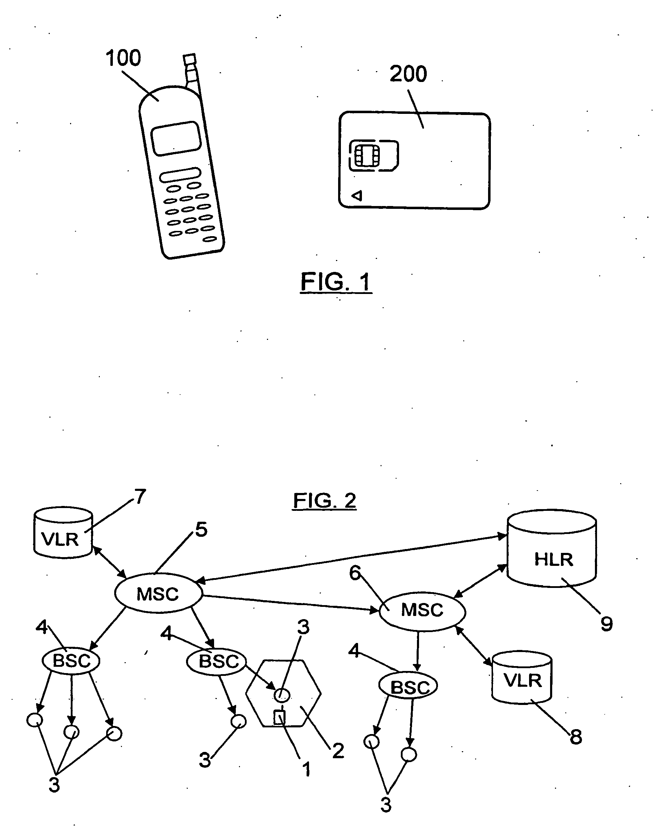

Currently, mobile telephones usually include a smart card comprising elements essential for operating the telephone. A "subscriber equipment" (schematically shown in figure 1) can be mentioned, comprising in both the GSM (Global System for Mobile Communication) system and in the GPRS (General Packet Radio Service) and UMTS (Universal Mobile Telecommunications System- also called Third Generation Mobile Telephony) systems:
- on one hand, a terminal (100) (which is many times called the "mobile telephone" and which includes a casing, display, keyboard, power source and several circuits); and
- on the other hand, the smart card (200); it is considered that a smart card is a physically secure device, i.e. it is a device in which the stored data is protected against attacks by third parties trying to read it, modify it, delete it or falsify it without the permission of the owner of the information.

### IMSI and ICC-ID:

At least two identifier codes are associated to the smart card: a subscriber or subscriber identifier code (IMSI) which will be discussed below, as well as an identifier code called ICC-ID (Integrated Circuit Card Identifier) which univocally identifies the integrated circuit of the card in which the U/SIM application is installed.

### U/SIM application:

The smart card used must either have a SIM installed application if it is GSM/GPRS, or a USIM application if it is UMTS.

The SIM (Subscriber Identity Module) application is a module or application authenticating the customer of the GSM/GPRS network to the network and stores the personal information of the subscriber. The USIM (Universal Subscriber Identity Module) application carries out the same functions as the SIM application, but does so for the UMTS network. Among its most important functions are the following:
- It stores the subscriber code necessary for its univocal identification in the network. Said code is known as IMSI (International Mobile Subscriber Identity).
- It carries out the algorithms for the authentication of the subscriber in the corresponding network.
- It calculates the keys for encrypting the communication.
- It manages the PINs and their unblocking keys.
- It stores and manages information of the operator.
- It stores and manages information of the subscriber: agenda, short messages, etc.

All the information on the SIM application is included in the GSM 11.11 standard. The information related to the USIM application is included in the standards: 3GPP 31.101 and 3GPP 31.102.

*U*/*SIM Application Toolkit* is a function supported on a U/SIM application. At first, mobile terminals were only capable of sending commands to the cards, whereas the cards were only capable of responding to commands received from the mobile terminal. An evolution in mobile terminals and in cards later occurred which allowed both of them to send as well as receive commands. It was thus achieved that a U/SIM application was able to make a request to a mobile terminal to send a short message, to make a call, etc. This function therefore allows developing applications housed in the card (i.e. they have been remotely or locally loaded in the card) and which handle the peripherals of the mobile telephone (display, keyboard, sending short messages, making calls, etc.), opening the doors to new applications providing added value to the mobile equipment.

These applications existing in the card and capable of sending commands to the mobile terminal are known as "SIM Application Toolkit" when they are supported on SIM, and "USIM Application Toolkit" when they are supported on USIM.

U/SIM Application Toolkits are an optional feature of the SIM and USIM applications. High level procedures, command content and command encoding are suitably specified in the GSM 11.14 standard for the SIM application, or in the 3GPP TS 31.111 standard for the USIM application.

### IMEI:

In the same manner as in the smart cards with the U/SIM application installed, an identifier code (IMSI) is stored which univocally identifies a customer (and an ICC-ID identifier code which univocally identifies the integrated circuit of the card), a code for univocally identifying said terminals is also stored in the terminals of the mobile telephones. Said identifier code is generically known as IMEI (International Mobile Station Equipment Identity).

### Basic structure of the network:

The mobile telephony backbone network is formed by certain main nodes carrying out the basic functions in the network, such as connecting and disconnecting the terminals, routing voice calling and sending short messages.

For the mobile telephony network or PLMN (Public Land Mobile Network), the geographic area is divided into cells, each one of which is serviced by a "base station" or BTS (Base Transceiver Station). Figure 2 shows a network of this type, where it can be seen how a mobile telephone 1 (in this document, a mobile telephone, a subscriber-the person who has the mobile telephone- and the customer are referred to indistinctively) is in a cell 2 corresponding to a base station 3; other base stations 3 correspond to other cells of the network.

Each base station (BTS) depends on a base station controller node or BSC (Base Station Controller) 4. The BSC 4 manages the activity of several base stations 3 which it is in charge of, for example, routing the calls and messages to the base station covering the destination mobile telephone.

In turn, several BSCs 4 depend on one switching center or MSC (Mobile Switching Center) (5, 6), a network node controlling several BSCs and managing the control of the location of the subscribers who are in its control area.

Furthermore, the network shown in figure 2 comprises several Visitor Location Registers or VLR (7, 8). The VLR is a "visiting" subscriber database which temporarily stores data related to subscribers who are in the network area corresponding to the VLR. Examples of data stored in the VLR are the IMSI (International Mobile Subscriber Identity), the MSISDN (the telephone number itself which is dialed to call the mobile telephone), or the TMSI (temporary identity different from the IMSI for security reasons), the location area where the subscriber has been registered and the supplementary services of the subscribing customers who, at that time, are in the network area covered by that VLR. Each VLR covers a location area. There can be several VLRs in the area covered by an MSC, but it is also possible for a VLR to contain information of areas covered by several MSCs. In some systems, there is one VLR for each MSC, and sometimes the MSC and the VLR are integrated in the same physical unit, which is sometimes called "MSC/VLR".

The network also comprises a master customer register or HLR (Home Location Register) 9 which is the database where all the data regarding the mobile service of the subscribers of the network is stored, such as their IMSI and MSISDN identity, the VLR in which they are located (each change of location area carried out by a mobile is detected by the network and its VLR address is automatically updated in the HLR database). There is also information concerning the type of service offered to the subscriber as well as the supplementary services provided to him/her. Usually in networks with many subscribers, the subscriber data is distributed in several HLRs.

On the other hand, the network also comprises the AuC (Authentication Center), which is a database that can be conceptually considered as part of the HLR. However, in practice, it can be an isolated node as well as a node integrated in the HLR itself. However, the concepts of AuC and HLR are usually separated for stressing the importance of security, a key topic in mobile networks, in which the radio interface represents a risk of unauthorized access to data.

When a new customer subscribes to the network, he/she is provided, together with his/her IMSI, with an individual identity password (K). The IMSI-K pair is stored in the U/SIM of the customer on one hand, and in the AuC on the other hand.

### EIR

The EIR (Equipment Identity Register) is the location register of equipment or terminals. Its function consists of allowing the prevention of using mobile telephone terminals which are not authorized in the network, for example, because they have been stolen or because they can cause disturbances in the network. The IMEI is used for the check. The EIR is basically a database which sorts the IMEI into three lists:
- White: it has no restriction.
- Black: terminals on the black list are prevented from accessing the network.
- Gray: they degrade the quality of the network, but not enough for preventing the terminals from being used.

The EIR is directly connected to the MSC. Its physical implementation consists of a database with a communications software for establishing the dialogue with the MSC. It can be an isolated node, but it can also be integrated with other nodes of the network, for example with the HLR and/or AuC.

### Network authentication mechanisms:

A high degree of security is attempted to be maintained in mobile telephony networks for both accessing the network and during the course of communication. To prevent fraudulent access, a mechanism has been arranged for the authentication of subscribers as well as for the verification of equipments, which the mobile stations must be subjected to prior to:
- registering in the network (once the initial registration is carried out, any connection of a subscriber to the network will be carried out with an identity temporarily "loaned" to the subscriber, "TMSI", which makes it impossible for any agent who was listening in on the signaling channel to extract his/her real identity by);
- making or receiving a call;
- obtaining supplementary services. Supplementary services are a set of services enriching or complementing calls. Each service has a series of alternatives the client can modify and adapt to his/her needs. To do this, he/she must have permission from the network. Some examples of supplementary services are: being able to prevent the possibility of making calls from a telephone and making it serve only to receive calls, or preventing only international calls, call forwarding to the voice mail box or to another number, etc.

### Authentication of subscribers:

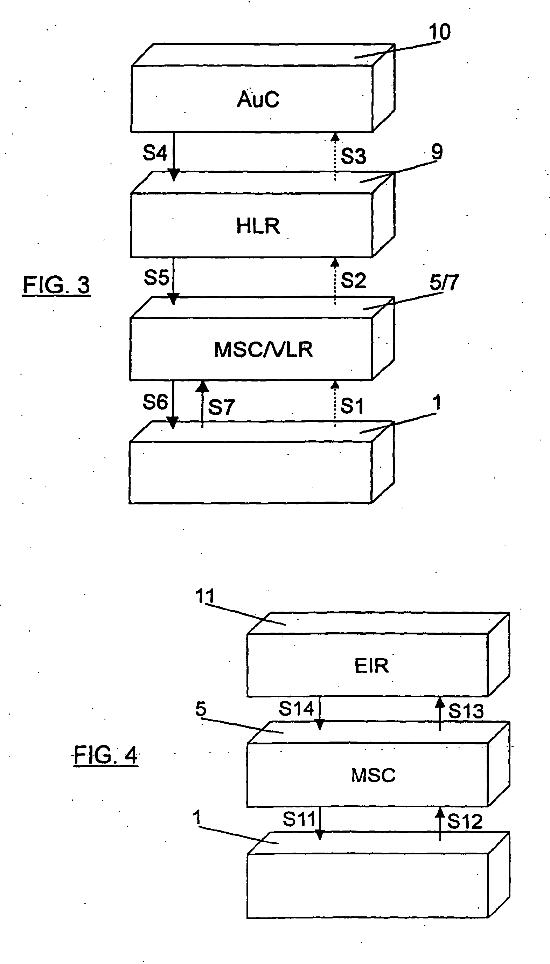

The process of authentication of the customer is schematically shown in figure 3: when the subscriber attempts to access the network, the mobile telephone sends to the AuC 10 its IMSI or TMSI (according to whether it is the first access to the network or a subsequent access) through the MSC/VLR 5/7 and HLR 9 modules. This sending is schematically represented with steps S1, S2 and S3. In the AuC, the individual password K of the customer is obtained from his/her identity. In steps S4 and S5, the AuC will be in charge of providing the VLR 7 with the necessary data so that it can send to the mobile telephone 1 an authentication request message (step S6). With this provided data, the mobile telephone will obtain a response from the U/SIM which it will return (in step S7 and through the MSC 5) to the VLR 7 where the authenticity of the customer will be checked.

### Authentication of equipments/terminals:

Validation of the physical equipment or terminal is carried out in the EIR in the following manner and according to that which is schematically shown in figure 4. The MSC sends (S11) to the mobile telephone 1 a message requesting the IMEI. The response of the mobile telephone 1 is routed (S12, S13) to the EIR 11 where the IMEI is verified. The EIR is a type of database basically containing three tables, as discussed above. In the ideal case, the sum of the registrations existing in these three tables must contain the number of mobile telephone terminals belonging to a mobile communications operator. The verification basically consists of verifying that the IMEI received by the EIR 11 is not on its black list, since if it were, the terminal would not be allowed to access the network. In step S14, the EIR provides the result of the verification to the MSC 5.

This authentication process usually is not carried out every time a telephone connects to the network. The specific establishment of the process depends on each operator of a mobile telephony network. It is fairly common to carry out the process randomly, in a percentage determined by the operator itself.

One example can be found in document WO 9635304 (NOKIA TELECOMMUNICATIONS) (07.11.1996).

### BACKGROUND AND DRAWBACKS

Mobile telephony operators usually try to provide their customers with the largest number of personalized services as possible for the purpose of permanently increasing their degree of satisfaction. However, sometimes said operators do not have mechanisms which are effective enough to obtain detailed data related to the activities carried out by their customers throughout the life cycle of a product or service contracted by the customers.

For example, it may be very beneficial for a mobile telephony operator to be able to identify in "real time" a series of events produced by the subscriber from the time he/she purchases his/her mobile equipment (made up of the U/SIM card and terminal). Among others, the following events could be pointed out:
- Identification of first customer activity: this would consist of identifying the exact time a new customer introduces his/her U/SIM card for the first time in a terminal to be registered in the network for the first time. The idea could be to detect which is the exact time a new client of a mobile telephony operator, who has purchased a pack made up of a U/SIM card and terminal, has introduced his/her card for the first time in the terminal and has turned on the telephone to connect to the network. This data would allow an operator to be able to design effective systems for automatically managing many external processes (focused on the final client) as well as internal processes (for the operator itself). For example, systems for controlling the fraudulent use of stolen terminals can be designed since, from the exact time a pack is activated, both the terminal (IMEI) as well as the customer (IMSI) using the terminal are controlled. Furthermore, the exact identification from the first instant of the card/terminal pair can allow the operator to analyze the real capabilities a customer has at all times in order to be able to offer a series of personalized services or other services. Not all the cards nor all the terminals are the same, or better said, they do not have the same capability. From the point of view of internal processes, the detection of said event would allow, for example, an operator to design new sales force remuneration systems (commercial systems) based not on the number of sales of packs in general, but rather on sales of packs which have actually been finally activated by the end subscriber.
- Identification of a change of customer terminal: this would consist of identifying the exact time when any one customer introduces his/her U/SIM card in a terminal other than the terminal which he/she has been using previously.

This information could be very useful for being able to identify, for example, what type of services could be offered in a personalized and automatic manner to a customer who either has access to his/her mobile telephony service for the first time, or has considered it appropriate to change his/her mobile terminal for another one with better performance.

This information could be very valuable for being able to identify and manage the black lists of terminals which are being used fraudulently. Although it is true that today, as in previous sections, there are authentication mechanisms implemented in the network by mobile communications operators for being able to validate the subscribers on one hand, as well as the terminals, it is also certain that the use of said mechanisms is usually carried out in a controlled manner (randomly and at a percentage determined by the operator itself), for the purpose of maximally reducing the increase of the signaling traffic volume which a mobile telephony operator would have to support in the case of wanting to authenticate the customer and the terminal every time the subscriber, for example, wanted to register into the network, make a call, send a short message, etc. Carrying out these mechanisms today would entail, in any case, with the current sizing level of mobile communications networks, a huge risk of a collapse of communications. A solution based on "oversizing" mobile communications networks would imply an increase of economic as well as environmental costs (it would be necessary to use a much larger number of antennas).

To this end, it would be interesting to have a method or mechanism according to which it is possible for a mobile telephony operator to be able to automatically identify, preferably in real time, a series of events produced by any customer from the time he/she purchases his/her mobile terminal, without needing to consume a signaling traffic as large as that which would be necessary today for being able to obtain said information. Specifically, it would be interesting to be able to detect events such as:
- when a subscriber introduces his/her card in a terminal for the first time and connects to the network (i.e. when the card is used for the first time); and/or
- when a subscriber introduces his/her card in a new terminal (other than the terminal in which the card was introduced on the previous occasion or on previous occasions); and/or
- when a specific terminal receives a card for the first time (i.e. when the terminal is used for the first time); and/or
- when a specific terminal receives a card other than the one it received on a previous occasion or on previous occasions.

### DESCRIPTION OF THE INVENTION

A first aspect of the invention refers to a module for detecting at least one event in a cellular mobile telephony subscriber equipment, said subscriber equipment comprising
a mobile telephone terminal and
a card with a Subscriber Identity Module (U/SIM), the terminal having a first code identifying the terminal and which can be read electronically, and
the Subscriber Identity Module having a second code identifying the card and/or a customer owning the Subscriber Identity Module (U/SIM) and which can be read electronically.

The detection module is configured to be housed in the card and comprises:
means for obtaining (by means of reading) the first code identifying the terminal when the card enters into operative contact with said terminal;
means for storing said first code in the card;
means for comparing said first code with a previous first code obtained and stored on a previous occasion when the card entered into operative contact with a terminal;
means for generating an output message according to the result of the comparison, such that:
   - if there is no previous first code stored in the card, a message is generated and sent indicating that the card has entered into operative contact with a terminal for the first time; and/or
   - if there is a previous first code stored in the card and if said previous first code is not identical to the first code identifying the terminal which the card is in operative contact with, a message is generated and sent indicating that the card has entered into operative contact with a different terminal from the terminal which the card entered into operative contact with on the previous occasion.

It can thus be detected, "from the point of view of the card", when the card is used for the first time and/or if the subscriber has changed the terminal. This information is sent to the interested party by means of the message, such that the interested party (for example, the mobile telephony network operator) can have this information available, for example, in practically real time.

Another aspect of the invention likewise refers to a module for detecting events in a cellular mobile telephony subscriber equipment, said subscriber equipment comprising
a mobile telephone terminal and
a card with a Subscriber Identity Module (U/SIM),
the terminal having a first code identifying the terminal and which can be read electronically, and
the Subscriber Identity Module having a second code identifying the card and/or a customer owner of the Subscriber Identity Module (U/SIM) and which can be read electronically.

The module for detecting is configured so as to be housed in the terminal and comprises:
means for obtaining (by means of reading) the second code when the card enters into operative contact with the terminal;
means for storing said second code in the terminal;
means for comparing said second code with a previous second code obtained and stored on a previous occasion when a card entered into operative contact with the terminal;
means for generating an output message according to the result of the comparison, such that:
   - if there is no previous second code stored in the terminal, a message is generated and sent indicating that a card has entered into operative contact with the terminal for the first time; and/or
   - if there is a previous second code stored in the terminal and if said previous second code is not identical to the second code identifying the card or the customer corresponding to the card which is in operative contact with the terminal, a message is generated and sent indicating that the card which has entered into operative contact with the terminal is a different card from the card which entered into operative contact in the terminal on the previous occasion.

It can thus be detected, "from the point of view of the terminal", when a card is introduced in the terminal for the first time and/or if a card different from the one used on the previous occasion is introduced. This information is sent to the interested party by means of the message, such that the interested party (for example, the mobile telephony network operator) can have this information available.

A third aspect of this invention refers to a method for detecting at least one event related to the use of a cellular mobile telephony subscriber equipment, said subscriber equipment comprising
a mobile telephone terminal and
a card with a Subscriber Identity Module (U/SIM),
the terminal having a first code identifying the terminal and which can be read electronically, and
the Subscriber Identity Module having a second code identifying the card and/or a customer owner of the Subscriber Identity Module (U/SIM) and which can be read electronically.

The method comprises the steps of:
obtaining (by means of reading) the first code identifying the terminal when the card enters into operative contact with said terminal;
storing said first code in the card;
comparing said first code with a previous first code obtained and stored on a previous occasion when the card entered into operative contact with a terminal;
generating an output message according to the result of the comparison, such that:
   - if there is no previous first code stored in the card, a message is generated and sent indicating that the card has entered into operative contact with a terminal for the first time; and/or
   - if there is a previous first code stored in the card and if said previous first code is not identical to the first code identifying the terminal which the card is in operative contact with, a message is generated and sent indicating that the card has entered into operative contact with a different terminal from the terminal which the card entered into operative contact with on the previous occasion.

It can thus be detected, "from the point of view of the card", when the card is used for the first time and/or if the subscriber has changed the terminal. This information is sent to the interested party by means of the message, such that the interested party (for example, the mobile telephony network operator) can have this information available.

A fourth aspect of the invention refers to a method for detecting at least one event related to the use of a cellular mobile telephony subscriber equipment, said subscriber equipment comprising
a mobile telephone terminal and
a card with a Subscriber Identity Module (U/SIM),
the terminal having a first code identifying the terminal and which can be read electronically, and
the Subscriber Identity Module having a second code identifying the card and/or a customer owner of the Subscriber Identity Module (U/SIM) and which can be read electronically.

The method comprises the steps of:
obtaining (by means of reading) the second code when the card enters into operative contact with the terminal;
storing said second code in the terminal;
comparing said second code with a previous second code obtained and stored in the terminal on a previous occasion when a card entered into operative contact with the terminal;
generating an output message according to the result of the comparison, such that:
   - if there is no previous second code stored in the terminal, a message is generated and sent indicating that a card has entered into operative contact with the terminal for the first time; and/or
   - if there is a previous second code stored in the terminal and if said previous second code is not identical to the second code identifying the card or the customer corresponding to the card which is in operative contact with the terminal, a message is generated and sent indicating that the card which has entered into operative contact is different from the card which entered into operative contact in the terminal on the previous occasion.

It can thus be detected, "from the point of view of the terminal", when a card is introduced in the terminal for the first time and/or if a card different from the one used on the previous occasion is introduced. This information is sent to the interested party by means of the message, such that the interested party (for example, the mobile telephony network operator) can have this information available quickly, for example, practically in real time.

In other words, in summary, it can be said that the invention refers to a module and method for detecting at least one event in a cellular mobile telephony subscriber equipment, which is based on detecting, when a card enters into operative contact with a terminal of a mobile telephone, if the code identifying the terminal or the card (or the corresponding customer) is the same as the corresponding code read on a previous occasion. If there is a code read on a previous occasion and if it is not the same, it is understood that the terminal or the card has been changed; if there is no code read on a previous occasion, it is understood that the terminal or the card has been used for the first time. In both cases, a corresponding message is generated and sent.

The first code can be the IMEI *(International Mobile Station Equipment Identity)* code.

The second code can be the *IMSI (International Mobile Subscriber Identity)* code, in which case it identifies the customer, and/or the ICC-ID *(Integrated Circuit Card Identifier)* code, in which case the code identifies the card. (Nevertheless, given that the IMSI is a piece of data pertinent to the customer, the reading of which requires authorization- by means of the PIN- of the customer, it is not appropriate to leave the IMSI stored in the terminal unless means are available for preventing the reading thereof by an unauthorized entity.)

Another aspect of the invention refers to a computer program, comprising program instructions for making a computer carry out the method described in the foregoing when the program is run in the computer.

Another aspect of the invention refers to said computer program in a support means; the support means can be, for example, a diskette, a CD-ROM, a memory of a computer, a smart card or any other type of data and instructions support means. The support means can also be an electric or optical signal, for example, a signal propagating through a telecommunications network.

Another aspect of the invention refers to a card for a mobile telephone, comprising a module according to that described above.

Another aspect of the invention refers to a mobile telephone terminal, comprising a module according to that described above.

The means for storing the codes can be configured such that they can store a large number of codes obtained on successive occasions of a card and terminal entering into operative contact. For example, there can be a FIFO (First In First Out) type register, such that the codes obtained on the last X occasions are stored, whereas the "older" codes are deleted. However, it may be enough for the register to have space for storing only two codes, namely, the last code obtained and the code obtained on the previous occasion. In fact, it could even store just the last code obtained: prior to storing it, this last code obtained would be compared with the code obtained on the previous occasion, and then the last code could be stored in the register or database, deleting the code obtained on the previous occasion.

The module can consist of, for example, a SAT/USAT application installed in the card.

Obtaining the first/second codes can be carried out with conventional reading commands.

The messages with which the results are sent can also be generated and sent with conventional means. The messages can be, for example, short messages (SM), or they can be sent through USSD (Unstructured Supplementary Service Data; this allows sending and receiving character chains in the GSM networks to provide new nonstandardized services).

### BRIEF DESCRIPTION OF THE DRAWINGS

A series of drawings will be explained below very briefly, which will aid in better understanding the invention and which are expressly related to one embodiment of said invention, which is presented as an illustrative and non-limiting example thereof.
Figure 1 schematically shows a subscriber equipment according to the state of the art.
Figure 2 schematically shows some of the main nodes of a conventional mobile telephony network, according to the state of the art.
Figure 3 schematically shows a subscriber authentication process, according to the state of the art.
Figure 4 schematically shows an equipment authentication process, according to the state of the art.
Figure 5 schematically shows a module according to a preferred embodiment of the invention.
Figure 6 schematically shows a system including a terminal and/or a card with a module according to a preferred embodiment of the invention.

### DESCRIPTION OF A PREFERRED EMBODIMENT

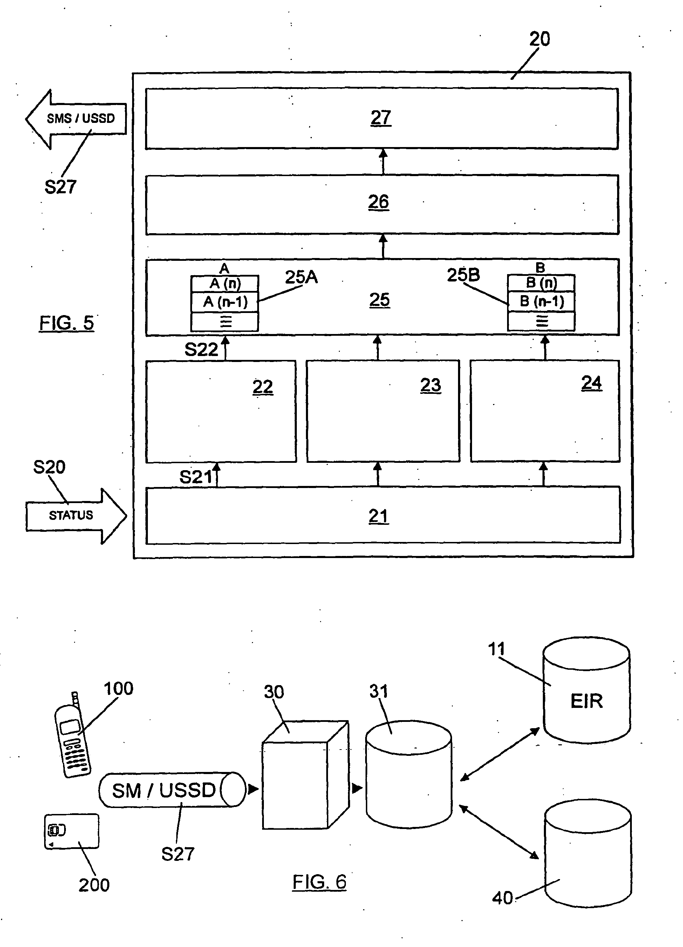

As can be seen in figure 5, a module for detecting events 20 according to a preferred embodiment of the invention comprises a triggering module 21, which waits for the reception of a signal S20 indicating that card and terminal have entered into operative contact to carry out a series of operations.

The module is configured such that it can work in a card (in which case it must read the first code associated to the terminal) or in the terminal (in which case it must read the second code associated with the customer of the card or with the card as such). In other words, it is a generic module which serves for the first aspect as well as the second aspect of the invention.

To that end, the module 20 is provided with a module for obtaining the IMEI (22), a module for obtaining the IMSI (23) and a module for obtaining the ICC-ID (24).

If the module 20 is housed in the card (which is perhaps the most practical solution, and in which case the module 20 can be a U/SAT application associated with the U/SIM module of the card 200), and given that the IMSI and the ICC-ID will not vary for a determined card (200), the modules for obtaining the IMSI (23) and for obtaining the ICC-ID (24) are not necessary for "detecting a change of terminal/IMEI" as such. However, said modules serve for obtaining the IMSI and/or the ICC-ID for their incorporation to the message which will be sent (see below).

However, if the module 20 is housed in a card 200 and if the subscriber introduces the card in the terminal 100, after requesting the PIN, the terminal will try to connect to the network. After said process, and as defined in the GSM 11.11 and/or 3GPP 31.101 standards, a command called STATUS will be sent periodically by the terminal 100 to the card 200 during periodic time intervals (every 30 seconds by default) in periods of inactivity in the terminal-card interface. The reception of this command (step S20) by the card 200 is detected by the module 20, which causes the triggering module 21 to generate a triggering signal S21 which is received by the module for obtaining the IMEI (22).

The module for obtaining the IMEI then obtains, by means of the use of the command *PROVIDE LOCAL INFORMATION* (defined in GSM 11.11 and 3GPP TS 31.111 standards), the IMEI of the terminal 100 in which the card 200 is introduced. This data is received (step S22) by an analysis module 25 comprising a database 25A for the "first codes" A which successively stores the IMEIs A(1),..., A(n-1) and A(n) detected on the last (n) occasions when the card has been introduced in a terminal (it is also possible to read the IMEI several times during the same period of contact between card and terminal, for example, each time the STATUS command is received). (In the case shown, the analysis module 25 also includes a data base 25B for the "second codes" B which would successively store the successively detected IMSIs or ICC-IDs B(1),..., B(n-1) and B(n) if the module 20 had been housed in the terminal, and therefore, had been intended for analyzing the identity of the cards introduced therein; this data base 25B for the second codes is not necessary when the module 20 is configured to be housed in the card; in the same manner, the database 25A for storing the first codes is not necessary when the module is configured to be housed in the terminal.)

The IMEI is obtained, therefore, stored in said database 25A, in position A(n). Then, it is compared to the IMEI stored in position A(n-1), i.e. with the IMEI obtained on the previous occasion, and:
- if there is no previous first code (A(n-1)) stored in the card, a message is generated and sent indicating that the card has entered into operative contact with a terminal for the first time; and
- if there is a previous first code (A(n-1)) stored in the card and if said previous first code (A(n-1)) is not identical to the first code (A(n)) identifying the terminal which the card is in operative contact with, a message is generated and sent indicating that the card has entered into operative contact with a different terminal from the terminal which the card entered into operative contact with on the previous occasion.

If the code A(n) is identical to the code (A(n-1)), the module "understands" that no change of terminal has occurred and that it is not the first time that the card enters into operative contact with a terminal either, as a result of which no message whatsoever is generated.

In the event that A(n) is not identical to A(n-1) (since A(n-1) is a different code or since there has not been any code A(n-1) stored), the analysis module 25 composes a notification message, which can comprise the first code A(n), namely the IMEI, as well as the IMSI and/or ICC-ID of the card, and an "activity flag" indicating if it is a change of terminal (since there was a previous first code A(n-1) stored in the database 25A) or if it is the first time the card enters into operative contact with a terminal (since there was not a previous first code A(n-1) stored in the database 25A).

This message can be encrypted by means of OTA keys solely existing in the U/SIM card itself of the customer and in the OTA server itself of the network. OTA is an acronym for Over the Air. It is a mechanism for updating the SIM card by means of short messages. The OTA server is the network node in charge of composing short messages (SM) with a security heading capable of being verified only by the card and vice versa. This security heading attempts to ensure the confidentiality as well as the integrity of the subscriber information transmitted in the short message.

The module for encrypting data 26 will be in charge of carrying out said encrypting operation, and then the message is sent (S27) as a short message (SM) or in a USSD session, from the module for sending data 27. The functioning of the modules for encrypting data 26 and for sending data 27 is conventional and does not require further explanation.

The module for encrypting data 26 could be equivalent to the OTA manager of the card. The task of this manager is, like the network OTA server, to compose and/or verify short messages (SM) with a security heading capable of being verified only by the OTA server.

Figure 6 shows a system in which it can be seen how a card 200 and a terminal 100, one of which houses a module according to the invention, has just sent the message (S27) indicating that, for example, the card has been introduced in a terminal for the first time, the terminal has received a card for the first time, the subscriber has changed terminal, or the terminal has received a new card. This message is received by the OTA server 30, which decrypts it and passes the information to a database and/or corporate server 31 where the information is stored and/or is suitably routed to other possible databases and/or related corporate servers. The operator has access to this database/corporate server 31 from its corporate systems 40. Figure 6 also shows how the EIR 11 is connected to said database/corporate server such that the contents in the databases of the EIR can be updated according to the information received by means of the invention, which can be of use for managing black lists of terminals, etc.

Throughout the present description and claims, the word "comprises" and variations thereof, such as "comprising", do not intend to exclude other steps or components.

## Claims

1. A module for detecting identification of first user activity in a cellular mobile telephony subscriber equipment, said subscriber equipment comprising
a mobile telephone terminal (100) and
a card (200) with a Subscriber Identity Module U/SIM
the terminal having a first code (A) identifying the terminal and which can be read electronically, and
the Subscriber Identity Module having a second code (B) identifying the card and/or a customer owner of the Subscriber Identity Module U/SIM and which can be read electronically,
**characterized in that**
the module for detecting comprises:
means for obtaining the first code (A(n)) and the second code (B(n)) when the card (200) enters into operative contact with the terminal (100);
means for storing said first code (A(n)) in the card (200) and said second code (B(n)) in the terminal (100);
means for comparing said first code (A(n)) with a previous first code (A(n-1)) obtained and stored in the card (200) on a previous occasion when the card (200) entered into operative contact with a terminal, said means also configured for comparing said second code (B(n)) with a previous second code (B(n-1)) obtained and stored in the terminal (100) on a previous occasion when a card entered into operative contact with the terminal (100);
means for generating an output message according to the result of the comparison, such that:
- if there is no previous first code (A(n-1)) stored in the card (200) and there is no previous second code (B(n-1)) stored in the terminal (100), a message is generated and sent indicating that a new card (200) is used for the first time in a terminal (100) to be registered in the network for the first time; and/or
- if there is no previous first code (A(n-1)) stored in the card (200) and there is at least one previous code (B(n-1)) stored in the terminal (100), a message is generated and sent indicating that the card (200) is used for the first time; and/or
- if there is no previous second code (B(n-1)) stored in the terminal (100) and there is at least one previous first code (A(n-1)) stored in the card (200), a message is generated and sent indicating that the terminal (100) is used for the first time.

2. A module according to claim 1, **characterized in that** said module for detecting is configured to be housed in one of the following:
- the card (200);
- the terminal (100).

3. A module according to any of claims 1 and 2, **characterized in that** the first code (A) is the IMEI International Mobile Station Equipment Identity code.

4. A module according to any of the previous claims, **characterized in that** the second code is the IMSI International Mobile Subscriber Identity code.

5. A module according to any of claims 1 to 3, **characterized in that** the second code is the ICC-ID Integrated Circuit Card Identifier code.

6. A method for detecting identification of first user activity related to the use of a cellular mobile telephony subscriber equipment, said subscriber equipment comprising
a mobile telephone terminal (100) and
a card (200) with a Subscriber Identity Module U/SIM,
the terminal having a first code (A) identifying the terminal and which can be read electronically, and
the Subscriber Identity Module having a second code (B) identifying the card and/or a customer owner of the Subscriber Identity Module U/SIM and which can be read electronically,
**characterized in that**
the method comprises the steps of:
obtaining the first code (A(n)) ant the second code (B(n)) when the card (200) enters into operative contact with the terminal (100);
storing said first code (A(n)) in the card (200) and said second code (B(n)) in the terminal (100);
comparing said first code (A(n)) with a previous first code (A(n-1)) obtained and stored in the card (200) on a previous occasion when the card (200) entered into operative contact with a terminal and comparing said second code (B(n)) with a previous second code (B(n-1)) obtained and stored in the terminal (100) on a previous occasion when a card entered into operative contact with the terminal (100);
generating an output message according to the result of the comparison, such that:
- if there is no previous first code (A(n-1)) stored in the card (200) and there is no previous second code (B(n-1)) stored in the terminal (100), a message is generated and sent indicating that a new card (200) is used for the first time in a terminal, (100) to be registered in the network for the first time; and/or
- if there is no previous first code (A(n-1)) stored in the card (200) and there is art least one previous code (B(n-1)) stored in the terminal (100), a message is generated and sent indicating that the card (200) is used for the first time; and/or
- if there is no previous second code (B(n-1)) stored in the terminal (100) and there is at least one previous first code (A(n-1)) stored in the card (200), a message is generated and sent indicating that the terminal (100) is used for the first time.

7. A method according to claim 6, **characterized in that** the steps of the method are carried out in one of the following:
- the card (200);
- the terminal (100)..

8. A method according to any of claims 6 and 7, **characterized in that** the first code (A) is the IMEI International Mobile Station Equipment Identity code.

9. A method according to any of claims 6 to 8, **characterized in that** the second code is the IMSI International Mobile Subscriber Identity code.

10. A method according to any of claims 6 to 8, **characterized in that** the second code is the ICC-ID Integrated Circuit Card Identifier code.

11. A computer program, comprising programming instructions for making a computer carry out the method according to any of claims 6 to 10, when the program is run in the computer.

12. A computer program according to claim 11, in a support means.

13. A card (200) for a mobile telephone, **characterized in that** it comprises a module according to claim 1.

## Patentansprüche

1. Modul zum Ermitteln einer Identifikation einer ersten Nutzeraktivitität in einem Mobilfunkteilnehmergerät, wobei das genannte Teilnehmergerät umfasst:
ein Mobilfunkendgerät (100) und
eine Karte (200) mit einem Teilnehmeridentifikationsmodul U/SIM,
wobei das Endgerät einen ersten Code (A) hat, der das Endgerät identifiziert, und welcher elektronisch gelesen werden kann, und
wobei das Teilnehmeridentifikationsmodul einen zweiten Code (B) hat, der die Karte und/oder einen Kunden identifiziert, der Besitzer des Teilnehmeridentifikationsmoduls U/SIM ist, und welcher elektronisch gelesen werden kann,
**dadurch gekennzeichnet, dass**
das Modul zum Ermitteln Folgendes umfasst:
Mittel zum Erhalten des ersten Codes (A/n)) und des zweiten Codes (B(n)), wenn die Karte (200) in einen Betriebskontakt mit dem Endgerät (100) tritt;
Mittel zum Speichern des genannten ersten Codes (A(n)) in der Karte (200) und des genannten zweiten Codes (B(n)) in dem Endgerät (100);
Mittel zum Vergleichen des genannten ersten Codes (A(n)) mit einem vorherigen ersten Code (A(n-a)), der in der Karte (200) bei einem vorherigen Ereignis erhalten und gespeichert wird, wenn die Karte (200) in Betriebskontakt mit einem Endgerät getreten ist, wobei die genannte Mittel auch ausgebildet sind, um den genannten zweiten Code (B(n)) mit einem vorherigen zweiten Code (B(n-1)) zu vergleichen, der in dem Endgerät (100) bei einem vorherigen Ergebnis erhalten und gespeichert ist, wenn eine Karte in Betriebskontakt mit dem Endgerät (100) getreten ist;
Mittel zum Erzeugen einer Ausgangsnachricht nach dem Ergebnis des Vergleichs, so dass:
- wenn kein vorheriger in der Karte (200) gespeicherter erster Code (A(n-1)) vorliegt und kein vorheriger im Endgerät (100) gespeicherter zweiter Code (B(n-1)) vorliegt, eine Nachricht erzeugt und gesendet wird mit der Angabe, dass eine neue Karte (200) zum ersten Mal in einem zum ersten Mal im Netzwerk zu registrierenden Endgerät (100) verwendet wird; und/oder
- wenn kein vorheriger in der Karte (200) gespeicherter erster Code (A(n-1)) vorliegt und zumindest ein im Endgerät (100) gespeicherter vorheriger Code (B(n-1)) vorliegt, eine Nachricht erzeugt und gesendet wird mit der Angabe, dass die Karte (200) zum ersten Mal verwendet wird; und/oder
- wenn kein vorheriger im Endgerät (100) gespeicherter zweiter Code (B(n-1)) vorliegt und zumindest ein vorheriger in der Karte (200) gespeicherter erster Code (A(n-1)) vorliegt, eine Nachricht erzeugt und gesendet wird mit der Angabe, dass das Endgerät (100) zum ersten Mal verwendet wird.

2. Modul nach Anspruch 1, **dadurch gekennzeichnet, dass** das genannte Modul zum Ermitteln ausgebildet ist, um in einem der folgenden Elemente aufgenommen zu werden:
- der Karte (200);
- dem Endgerät (100).

3. Modul nach einem der Ansprüche 1 und 2, **dadurch gekennzeichnet, dass** der erste Code (A) der IMEI-Code (International Mobile Station Equipment Identity) ist.

4. Modul nach einem der vorherigen Ansprüche, **dadurch gekennzeichnet, dass** der zweite Code der IMSI- Code (International Mobile Subscriber Identity) ist.

5. Modul nach einem der Ansprüche 1 bis 3, **dadurch gekennzeichnet, dass** der zweite Code der ICC-ID-Code (Integrated Circuit Card Identifier) ist.

6. Verfahren zum Ermitteln der Identifikation der ersten Nutzeraktivität in Bezug auf den Gebrauch eines Mobilfunkteilnehmergeräts, wobei das genannte Teilnehmergerät umfasst:
ein Mobilfunkendgerät (100) und
eine Karte (200) mit einem Teilnehmeridentifikationsmodul U/SIM,
wobei das Endgerät einen ersten Code (A) hat, der das Endgerät identifiziert und welcher elektronisch gelesen werden kann, und
wobei das Teilnehmeridentifikationsmodul einen zweiten Code (B) hat, der die Karte und/oder einen Kunden identifiziert, der Besitzer des Teilnehmeridentifikationsmoduls U/SIM ist, und welcher elektronisch gelesen werden kann,
**dadurch gekennzeichnet, dass**
das Verfahren die folgenden Schritte umfasst:
Erhalten des ersten Codes (A(n)) und des zweiten Codes (B(n)), wenn die Karte (200) in Betriebskontakt mit dem Endgerät (100) tritt;
Speichern des genannten ersten Codes (A(n)) in der Karte (200) und des genannten zweiten Codes (B(n)) im Endgerät (100);
Vergleichen des genannten ersten Codes (A(n)) mit einem vorherigen ersten Code (A(n-1)), der in der Karte (200) bei einem vorherigen Ereignis erhalten und gespeichert wird, wenn die Karte (200) in Betriebskontakt mit einem Endgerät getreten ist und Vergleichen des genannten zweiten Codes (B(n)) mit einem vorherigen zweiten Code (B(n-1)), der im Endgerät (100) bei einem vorherigen Ereignis erhalten und gespeichert wird, wenn eine Karte in Betriebskontakt mit dem Endgerät (100) getreten ist;
Erzeugen einer Ausgangsnachricht nach dem Ergebnis des Vergleichs, so dass:
- wenn kein vorheriger in der Karte (200) gespeicherter erster Code (A(n-1)) vorliegt und kein vorheriger im Endgerät (100) gespeicherter zweiter Code (B(n-1)) vorliegt, eine Nachricht erzeugt und gesendet wird mit der Angabe, dass eine neue Karte (200) zum ersten Mal in einem zum ersten Mal im Netzwerk zu registrierenden Endgerät (100) verwendet wird; und/oder
- wenn kein vorheriger in der Karte (200) gespeicherter erster Code (A(n-1)) vorliegt und zumindest ein im Endgerät (100) gespeicherter vorheriger Code (B(n-1)) vorliegt, eine Nachricht erzeugt und gesendet wird mit der Angabe, dass die Karte (200) zum ersten Mal verwendet wird; und/oder
- wenn kein vorheriger im Endgerät (100) gespeicherter zweiter Code (B(n-1)) vorliegt und zumindest ein vorheriger in der Karte (200) gespeicherter erster Code (A(n-a)) vorliegt, eine Nachricht erzeugt und gesendet wird mit der Angabe, dass das Endgerät (100) zum ersten Mal verwendet wird.

7. Verfahren nach Anspruch 6, **dadurch gekennzeichnet, dass** die Schritte des Verfahrens in einem der folgenden Element durchgeführt werden:
- der Karte (200);
- dem Endgerät (100).

8. Verfahren nach einem der Ansprüche 6 und 7, **dadurch gekennzeichnet, dass** der erste Code (A) der IMEI-Code (International Mobile Station Equipment) ist.

9. Verfahren nach einem der Ansprüche 6 bis 8, **dadurch gekennzeichnet, dass** der zweite Code der IMSI-Code (International Mobile Subscriber Identity) ist.

10. Verfahren nach einem der Ansprüche 6 bis 8, **dadurch gekennzeichnet, dass** der zweite Code der ICC-ID (Integrated Circuit Card Identifier) ist.

11. Computerprogramm, welches Programmierungsanweisungen umfasst, um einen Computer dazu zu veranlassen, das Verfahren nach einem der Ansprüche 6 bis 10 durchzuführen, wenn das Programm auf dem Computer läuft.

12. Computerprogramm nach Anspruch 11, in einem Trägermittel.

13. Karte (200) für ein Mobiltelefon, **dadurch gekennzeichnet, dass** sie ein Modul nach Anspruch 1 umfasst.

## Revendications

1. Module pour détecter l'identification d'une activité d'un premier utilisateur dans un équipement d'abonné de téléphonie mobile cellulaire, ledit équipement d'abonné comprenant :
un terminal de téléphone mobile (100) et
une carte (200) avec un module d'identité d'abonné U/SIM
le terminal ayant un premier code (A) identifiant le terminal et qui peut être lue électroniquement, et
le module d'identité d'abonné ayant un second code (B) identifiant la carte et/ou un propriétaire client du module d'identité d'abonné U/SIM et qui peut être lue électroniquement,
**caractérisé en ce que**
le module de détection comprend :
des moyens pour obtenir le premier code (A(n)) et le second code (B(n)) lorsque la carte (200) entre en contact opérationnel avec le terminal (100) ;
des moyens pour stocker ledit premier code (A(n)) dans la carte (200) et ledit second code (B(n)) dans le terminal (100) ;
des moyens pour comparer ledit premier code (A(n)) avec un premier code précédent (A(n-1)) obtenu et stocké dans la carte (200) lors d'une occasion précédente lorsque la carte (200) est entrée en contact opérationnel avec un terminal, lesdits moyens également configurés pour comparer ledit second code (B(n)) avec un second code précédent (B(n-1)) obtenu et stocké dans le terminal (100) lors d'une occasion précédente lorsqu'une carte est entrée en contact opérationnel avec le terminal (100) ;
des moyens pour générer un message de sortie selon le résultat de la comparaison, de manière que :
- s'il n'y a pas de premier code précédent (A(n-1)) stocké dans la carte (200) et s'il n'y a pas de second code précédent (B(n-1)) stocké dans le terminal (100), un message est généré et envoyé en indiquant qu'une nouvelle carte (200) est utilisée pour la première fois dans un terminal (100) à registrer dans le réseau pour la première fois ; et/ou
- s'il n'y a pas de premier code précédent (A(n-1)) stocké dans la carte (200) et s'il y a au moins un code précédent (B(n-1)) stocké dans le terminal (100), un message est généré et envoyé en indiquant que la carte (200) est utilisée pour la première fois; et/ou
- s'il n'y a pas de second code précédent (B(n-1)) stocké dans le terminal (100) et s'il y a au moins un premier code précédent (A(n-1)) stocké dans la carte (200), un message est généré et envoyé en indiquant que le terminal (100) est utilisée pour la première fois.

2. Module selon la revendication 1, **caractérisé en ce que** ledit module de détection est configuré pour être logé dans un des suivants :
la carte (200) ;
le terminal (100).

3. Module selon l'une quelconque des revendications 1 et 2, **caractérisé en ce que** le premier code (A) est le code d'identité d'équipement de station mobile international IMEI.

4. Module selon l'une quelconque des revendications précédentes, **caractérisé en ce que** le second code est le code d'identité d'abonné mobile international IMSI.

5. Module selon l'une quelconque des revendications 1 a 3, **caractérisé en ce que** le second code est le code identificateur de carte de circuit intégré ICC-ID.

6. Procédé pour détecter l'identification de l'activité d'un premier utilisateur lié à l'utilisation d'un équipement d'abonné de téléphonie mobile cellulaire, ledit équipement d'abonné comprenant :
un terminal de téléphone mobile (100) et
une carte (200) avec un module d'identité d'abonné U/SIM,
le terminal ayant un premier code (A) identifiant le terminal et qui peut être lue électroniquement, et
le module d'identité d'abonné ayant un second code (B) identifiant la carte et/ou un propriétaire client du module d'identité d'abonné U/SIM et qui peut être lue électroniquement
**caractérisé en ce que**
le procédé comprend les étapes de :
obtenir le premier code (A(n)) et le second code (B(n)) lorsque la carte (200) entre en contact opérationnel avec terminal (100) ;
stocker ledit premier code (A(n)) dans la carte (200) et ledit second code (B(n)) dans le terminal (100)
comparer ledit premier code (A(n)) avec un premier code précédent (A(n-1)) obtenu et stocké dans la carte (100) lors d'une occasion précédente lorsque la carte (200) est entrée en contact opérationnel avec un terminal (100) et comparer ledit second code (B(n)) avec un second code précédent (B(n-1)) obtenu et stocké dans le terminal (100) lors d'une occasion précédente lorsqu'une carte est entrée en contact opérationnel avec le terminal (100) ;
générer un message de sortie selon le résultat de la comparaison, de manière que :
- s'il n'y a pas de premier code précédent (A(n-1)) stocké dans la carte (200) et s'il n'y a pas de second code précédent (B(n-1)) stocké dans el terminal (100), un message est généré et envoyé en indiquant qu'une nouvelle carte (200) est utilisée pour la première fois dans une borne (100) à registrer dans le réseau pour la première fois; et/ou
- s'il n'y a pas de premier code précédent (A(n-1)) stocké dans la carte (200) et s'il y a au moins un premier code précédent (B(n-1)) stocké dans la borne (100), un message est généré et envoyé en indiquant que la carte (200) est utilisée pour la première fois; et/ou
- s'il n'y a pas de second code précédent (B(n-1)) stocké dans le terminal (100) et s'il y a au moins un premier code précédent (A(n-1)) stocké dans la carte (200), un message est généré et envoyé en indiquant que le terminal (100) est utilisée pour la première fois.

7. Procédé selon la revendication 6, **caractérisé en ce que** les étapes du procédé sont réalisées dans un des suivantes :
la carte (200) ;
le terminal (100).

8. Procédé selon l'une quelconque des revendications 6 et 7, **caractérisé en ce que** le premier code (A) est le code d'identité d'abonné d'équipement de station mobile international IMEI.

9. Procédé selon l'une quelconque des revendications précédentes 6 à 8, **caractérisé en ce que** le second code est le code d'identité d'abonné mobile international IMSI.

10. Procédé selon l'une quelconque des revendications 6 à 8, **caractérisé en ce que** le second code est le code identificateur de carte de circuit intégré ICC-ID.

11. Programme informatique, comprenant les instructions de programmation pour qu'un ordinateur exécute le procédé selon l'une quelconque des revendications 6 à 10, lorsque le programme est exécuté dans l'ordinateur.

12. Programme informatique selon la revendication 11, dans un moyen de support.

13. Carte (200) pour un téléphone mobile, **caractérisée en ce qu'**elle comprend un module selon la revendication 1.
